# FASCICULE DE BREVET EUROPEEN

(11) **EP 0 970 871 B1**
(45) Date de publication et mention de la délivrance du brevet: **08.09.2004**
(21) Numéro de dépôt: 99460041.9
(22) Date de dépôt: 14.06.1999
(51) Int. Cl.: B62B 7/14

(54) **Poussette pliante pour enfant, à mémorisation de l'inclinaison du hamac**
Zusammenklappbarer Kinderwagen mit Speicherung der Neigungswinkel der Hängematte
Foldable push-chair for a child with memorisation of the tilting of the hammock

(30) Priorité: 08.07.1998 FR 9808965
(43) Date de publication de la demande: 12.01.2000
(73) Titulaire: AMPAFRANCE, 49309 Cholet (FR)
(72) Inventeur: Bigo, M. Jean, 49300 Cholet (FR); Ageneau, M. Laurent, 49300 Cholet (FR)
(74) Mandataire: Vidon, Patrice

(56) Documents cités:
- EP-A- 0 339 890
- DE-A- 3 838 925
- FR-A- 2 617 110
- US-A- 5 074 575

## Description

Le domaine de l'invention est celui de la puériculture, et en particulier des poussettes pour enfant. Plus précisément, l'invention concerne une poussette pliante pour enfant selon le préambule de la revendication 1 dont le hamac est inclinable et présente un angle d'assise variable en fonction de son inclinaison. Une telle poussette est connue du document FR-A-2 617 110.

On connaît déjà de nombreuses poussettes à hamac, ou nacelle, inclinables. Classiquement, le hamac est monté sur le châssis de la poussette. Divers moyens sont prévus, sur le châssis. pour guider, mettre en place et maintenir en position le hamac dans la position souhaitée.

Une amélioration connue consiste à faire varier l'angle d'ouverture de l'assise du hamac, en fonction de son inclinaison. Ainsi, lorsque le hamac est dans une position sensiblement droite (position assise), l'angle de l'assise (angle formé par l'élément d'assise et l'élément de dossier du hamac) de l'ordre de 110°, de façon à former un fauteuil, avec dossier. Inversement, lorsque le hamac est en position allongée, l'angle formé par l'assise du hamac s'ouvre fortement (de l'ordre de 160°). Ainsi, l'enfant est confortablement assis lorsque le hamac est en position assise, et allongé, lorsque le hamac est en position allongée. Des positions intermédiaires peuvent bien sûr être prévues.

Un inconvénient des poussettes à hamac à inclinaison réglable quelles qu'elles soient est qu'elles sont peu aisées à plier. Or on sait que la simplicité de manipulation des dispositifs de puériculture en général, et des poussettes pliantes en particulier, est un objectif essentiel.

De nombreuses solutions ont été proposées, qui permettent d'obtenir un pliage et un dépliage pratiquement automatiques, ou à tout le moins nécessitant un nombre très réduit de manipulations simples, tout en répondant bien sûr aux exigences de sécurité.

Toutefois, il reste toujours nécessaire, préalablement au pliage, de ramener le hamac dans une inclinaison de référence. Sinon, selon les cas, le pliage est impossible ou le hamac forme un angle important avec le châssis plié, ce qui est incompatible avec les exigences de faible encombrement de la poussette pliée.

Cela rajoute également une manipulation lors du dépliage, puisque le hamac revient systématiquement dans une inclinaison de référence, alors que l'utilisateur souhaite généralement retrouver l'inclinaison précédente de l'état de l'art.

L'invention a notamment pour objectif de pallier ces inconvénients.

Plus précisément, un objectif de l'invention est de fournir une poussette pliante à hamac à inclinaison réglable, dont le pliage ne nécessite aucune opération supplémentaire, par rapport à une poussette à hamac fixe, quelle que soit l'inclinaison du hamac.

Un autre objectif de l'invention est de fournir une telle poussette, dont le dépliage permette de retrouver l'inclinaison du hamac, de façon automatique.

Un objectif particulier de l'invention est de fournir, dans un mode de réalisation, une poussette dont le hamac soit réversible, c'est-à-dire positionné tel que l'enfant ait le regard dirigé vers la route (dans le sens de progression de la poussette) ou vers la personne qui conduit la poussette (sens opposé au sens de progression de la poussette).

L'invention a également pour objectif, bien sûr, de fournir une telle poussette dont l'encombrement en position pliée n'est pas modifiée par la mise en oeuvre des nouvelles fonctions.

Encore un objectif de l'invention est de fournir une telle poussette, dont les nouvelles fonctions n'entraînent ni surcoût important, ni augmentation importante du poids de la poussette, du nombre de pièces mises en oeuvre, de la complexité de fabrication des pièces et de leur montage,...

L'invention concerne donc une poussette pliante pour enfant, du type comprenant un hamac inclinable monté sur un châssis de poussette, présentant deux bras-poussoirs pouvant coulisser, de façon à permettre le pliage, le long de deux piètements avant respectivement, la solidarisation dudit hamac sur ledit châssis étant assurée par la coopération entre des premiers moyens de solidarisation montés sur ledit hamac et des seconds moyens de solidarisation montés sur ledit châssis.

Par hamac, on entend ici la nacelle recevant l'enfant, ainsi que les moyens de support de cette dernière (armature, éléments de rigidification,...).

Selon l'invention, lesdits premiers moyens de solidarisation portent des moyens de réglage de l'inclinaison dudit hamac, et lesdits seconds de moyens de solidarisation coopèrent avec des moyens de verrouillage tels que:
- lorsque ledit châssis est en position déployée, lesdits seconds moyens de solidarisation sont maintenus dans une position fixe unique ;
- lorsque ledit châssis est en position pliée, lesdits seconds moyens de solidarisation sont libres en rotation, selon un axe perpendiculaire auxdits piètements avant et parallèle au plan formé par le châssis plié, sur une plage de rotation prédéterminée,
de façon que ledit hamac puisse venir sensiblement dans le plan formé par ledit châssis plié, sur une plage de rotation prédéterminée.

Ainsi, les fonctions d'inclinaison et de pliage sont désolidarisées : l'inclinaison est associée au hamac, et le pliage au châssis. Le hamac, et les éléments qu'il porte, ne sont pas modifiés lors du pliage. On obtient ainsi un effet de mémoire de l'inclinaison, le hamac reprenant automatiquement son inclinaison précédente.

Aucune manipulation particulière n'est nécessaire, ni pour le pliage, ni pour le dépliage, par rapport à la technique antérieure.

De façon avantageuse, lesdits premiers moyens de solidarisation peuvent être solidarisés auxdits seconds moyens de solidarisation de deux façons distinctes, ledit hamac pouvant être placé de façon que l'enfant transporté est le regard vers l'avant ou vers l'arrière, par rapport à la direction de progression de la poussette.

En effet, l'approche de l'invention s'applique en particulier au cas où le hamac est réversible (qui nécessite, selon les techniques connues, des manipulations importantes et peu commodes).

Préférentiellement, ladite plage de rotation couvre un angle d'au moins 60°, et généralement beaucoup plus, notamment pour le cas des hamacs réversibles.

Selon un premier mode de réalisation de l'invention, lesdits moyens de verrouillage comprennent au moins une biellette, dont une première extrémité est monté sur un piètement arrière dudit châssis et une seconde extrémité est montée sur lesdits seconds moyens de solidarisation.

On assure ainsi la fonction nouvelle de l'invention d'une façon particulièrement simple et peu coûteuse, et offrant une très bonne efficacité.

Avantageusement, ladite position fixe unique desdits seconds moyens de solidarisation est définie par au moins une butée réalisée sur ledit châssis et coopèrent avec une came prévue à cet effet sur lesdits seconds moyens de solidarisation.

Notamment, on peut prévoir que le dispositif comprend une butée supérieure, réalisée sur un desdits bras-poussoirs, et une butée inférieure, réalisée sur le piètement avant correspondant.

D'autres moyens peuvent également être envisagés, tels que des ergots coopérant avec des encoches.

Selon un deuxième mode de réalisation, lesdits moyens de verrouillage comprennent au moins une biellette dont une première extrémité est montée d'un desdits éléments de support, et la seconde extrémité est mobile parallèlement auxdits piètements avant et auxdits bras-poussoirs.

Avantageusement, ladite biellette est monté sur une pièce coulissant entre le piètement et le bras-poussoir.

A nouveau, le fonctionnement du dispositif est alors très simple.

De façon préférentielle, en position déployée, ladite pièce coulissante vient en contact avec un manchon de guidage et de maintien d'un desdits piètements et du bras-poussoir correspondant.

La description qui précède fait essentiellement référence à un seul côté de la poussette. Cependant, bien que dans certains cas on puisse envisager une dissymétrie des moyens mis en oeuvre, une poussette selon l'invention comprend avantageusement des moyens de solidarisation similaires sur chacune de ses deux parties latérales.

D'autres caractéristiques et avantages de l'invention apparaîtront plus clairement à la lecture de la description suivante de deux modes de réalisation préférentiels de l'invention, donnée à titre de simple exemples illustratifs et non limitatifs et des dessins annexés, parmi lesquels :
- la figure 1 illustre, de façon partielle, le châssis d'une poussette selon un premier mode de réalisation de l'invention, en position dépliée ;
- les figures 2A à 2C présentent, schématiquement, trois des positions que peut prendre le hamac, sur le châssis de la figure 1 ;
- les figures 3A et 3C illustrent le châssis de la figure 1, en position pliée, selon que le hamac se trouve respectivement dans les positions des figures 2A à 2C ;
- les figures 4A et 4B présentent le mécanisme de verrouillage et de mémorisation de la position du hamac, lorsque le châssis est déplié et replié respectivement.

Comme indiqué précédemment, l'invention concerne une technique permettant un pliage aisé et efficace d'une poussette pour enfant, tout en mémorisant l'inclinaison du hamac, de façon que ce dernier reprenne automatiquement son inclinaison précédente, lors d'un redépliage de la poussette.

L'invention repose notamment sur la séparation de deux fonctions : la fonction d'inclinaison, assurée par des éléments de solidarisation montés sur le hamac, et la fonction de pliage, et plus précisément de verrouillage/déverrouillage, assurée par des éléments de solidarisation du hamac et du châssis qui coopèrent, dans leur fonction principale, pour solidariser le hamac au châssis. Avantageusement, ils sont conçus pour que la position du hamac sur le châssis soit réversible.

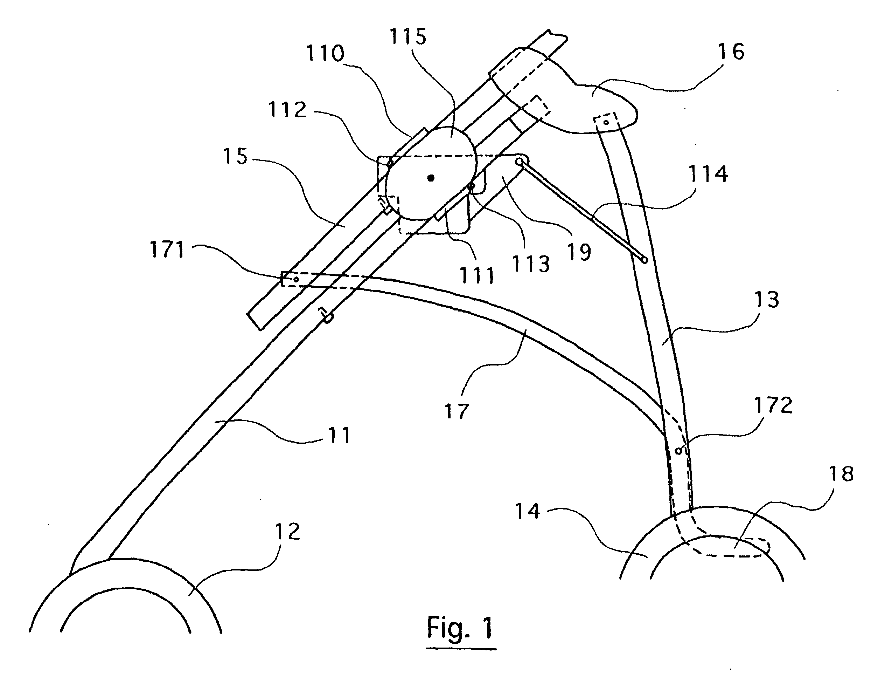

Un premier mode de réalisation de l'invention est illustré par les figures 1 à 3C.

La figure 1 présente le châssis de la poussette, en position dépliée, ou déployée, vu de côté.

On notera que toutes les figures présentent des éléments vus de côté. Il est clair que, préférentiellement, les deux côtés de la poussette sont symétriques, et qu'on y retrouvent les mêmes éléments, assurant les mêmes fonctions.

Sur la figure 1, on distingue le piètement avant 11, portant une ou plusieurs roues 12, le piètement arrière 13 portant une ou plusieurs roues 14 et le bras-poussoir 15.

Ces trois éléments de châssis sont reliés par un élément de liaison 16, sur lequel :
- l'extrémité supérieure du piètement avant 11 est maintenue de façon fixe ;
- l'extrémité supérieure du piètement arrière 13 est montée articulée, de façon à pouvoir venir parallèlement au piètement avant lors du pliage ;
- le bras-poussoir 15 est monté coulissant.

Une traverse 17, qui peut se prolonger par un marche-pied 18, relie par deux articulations 171 et 172 le bras-poussoir 15 et le piètement arrière 13.

L'élément 19 de solidarisation avec le hamac est monté de façon articulée sur un coulisseau 115 coulissant sur le bras-poussoir 15 et le piètement avant 11. Il est maintenu dans une position dépliée fixe unique (partie supérieure horizontale) par l'intermédiaire de deux butées 110 et 111, montées sur le coulisseau (ou coulisse double) 115, et qui coopèrent avec des cames 112 et 113 ménagées à cet effet sur l'élément 19 de solidarisation. Selon un autre mode de réalisation, on peut prévoir une seule butée et une seule came.

Il a été amené dans cette position, lors du dépliage, par la biellette 114, articulée d'une part sur l'élément de solidarisation 19, et d'autre part sur le piètement arrière 13.

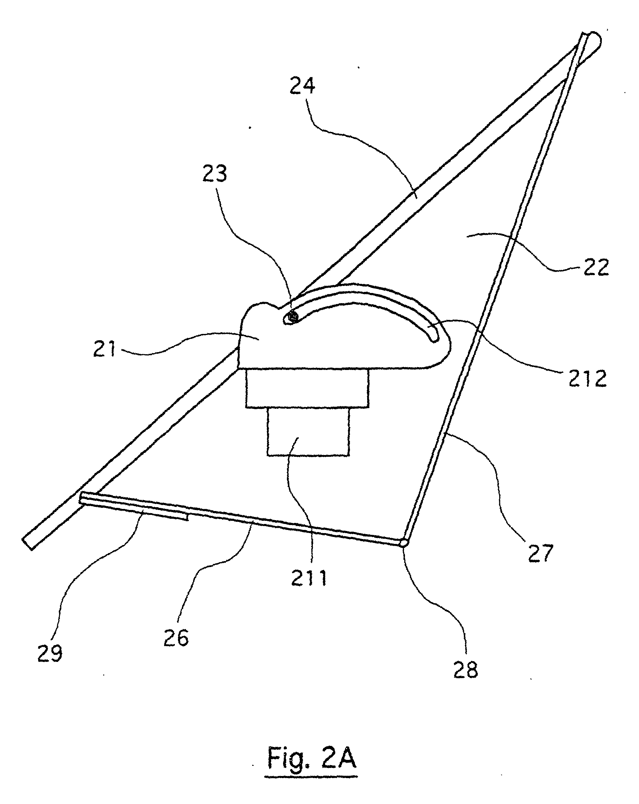

Le hamac comprend un second élément de solidarisation 21, complémentaire de l'élément de solidarisation 19, et que l'on distingue sur les figures 2A à 2C. Ce second élément de solidarisation 21 comprend une partie inférieure 211 qui vient s'inscrire dans l'élément de solidarisation 19 du châssis, de façon que le hamac 22 soit facilement et solidement mis en place et maintenu. Un mode de réalisation de cette technique est décrit dans le document FR-A-2 753 159.

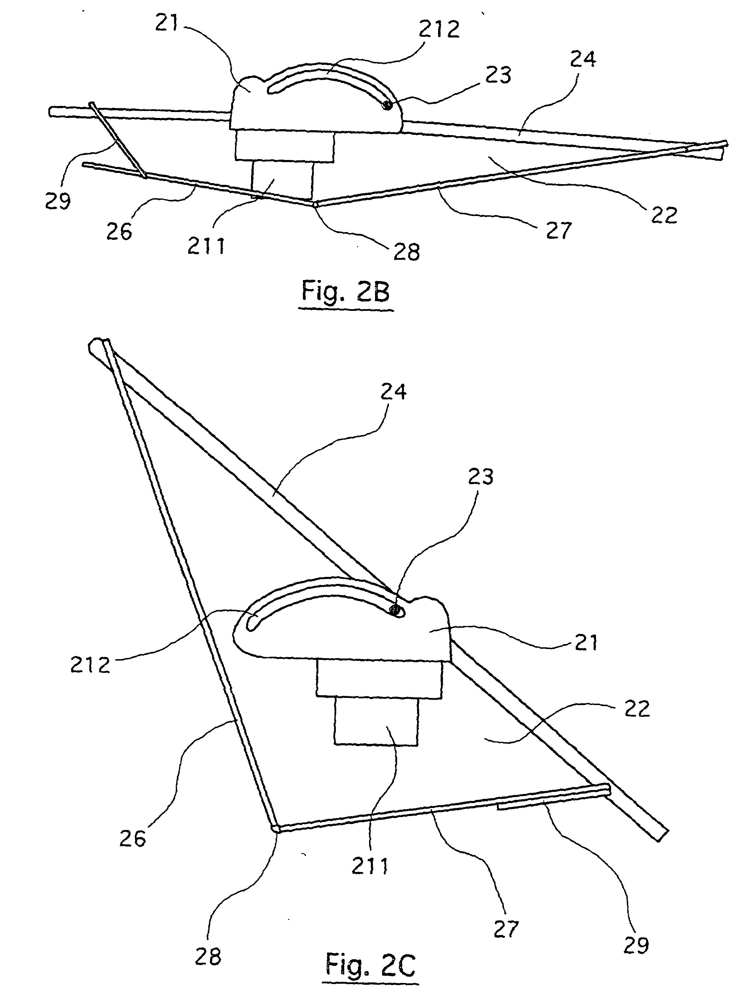

Le mécanisme d'inclinaison du hamac est porté exclusivement par le hamac, et plus précisément par l'élément de solidarisation 21, indépendamment du châssis. Comme cela est illustré par les figures 2A et 2B, il peut par exemple comprendre une fente de coulissement 212, dans laquelle se déplace un doigt 23 monté sur le hamac 22 et plus précisément sur l'armature 24. Des crans d'arrêt, ou un autre mécanisme, sont prévus pour maintenir le hamac dans l'inclinaison souhaitée, entre :
- la position assise, telle qu'illustrée en figure 2A ;
- la position allongée, telle qu'illustrée en figure 2B.

Ce système d'inclinaison en tant que tel est décrit plus précisément dans le document EP-A- 0 931 710.

Selon cette technique, on fait varier l'angle d'ouverture de l'assise du hamac, en fonction de son inclinaison. Ainsi, lorsque le hamac est dans une position sensiblement droite (position assise), l'angle de l'assise (angle formé par l'élément d'assise et l'élément de dossier du hamac) de l'ordre de 110°, de façon à former un fauteuil, avec dossier. Inversement, lorsque le hamac est en position allongée, l'angle formé par l'assise du hamac s'ouvre fortement (de l'ordre de 160°). Ainsi, l'enfant est confortablement assis lorsque le hamac est en position assise, et allongé, lorsque le hamac est en position allongée. Des positions intermédiaires peuvent bien sûr être prévues.

Pour obtenir ce résultat, le hamac présente, vu de côté, une structure en triangle déformable. L'hypoténuse de ce triangle est formée par l'armature 24 du hamac. Les deux autres côtés (partie d'assise et partie de dossier) sont deux éléments de rigidification 26 et 27 (classiquement des planchettes en matière plastique) articulés à leur sommet commun 28. L'armature est conçue de façon que sa longueur puisse varier. Les variations de cette longueur entraîne automatiquement l'ouverture ou la fermeture de l'angle formé par la partie d'assise et la partie de dossier. Un élément complémentaire d'articulation 29 peut être prévu.

Plus précisément, en position assise, l'armature présente sa longueur minimale, et en position allongée, sa longueur maximale. Pour cela, l'armature est conçue en deux parties, une partie supérieure et une partie inférieure, la partie supérieure pouvant téléscopiquement pénétrer dans une portion de la partie inférieure.

Par ailleurs, les éléments de liaison 19 et 21 sont conçus de façon de façon que le hamac soit réversible par rapport au châssis, ainsi que cela est illustré par les figures 2A et 2C.

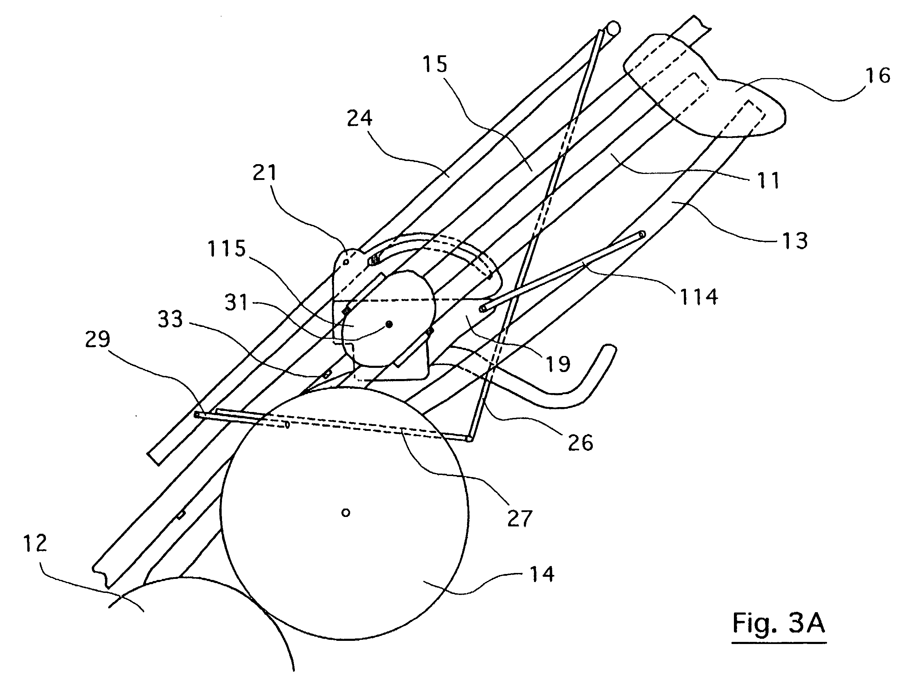

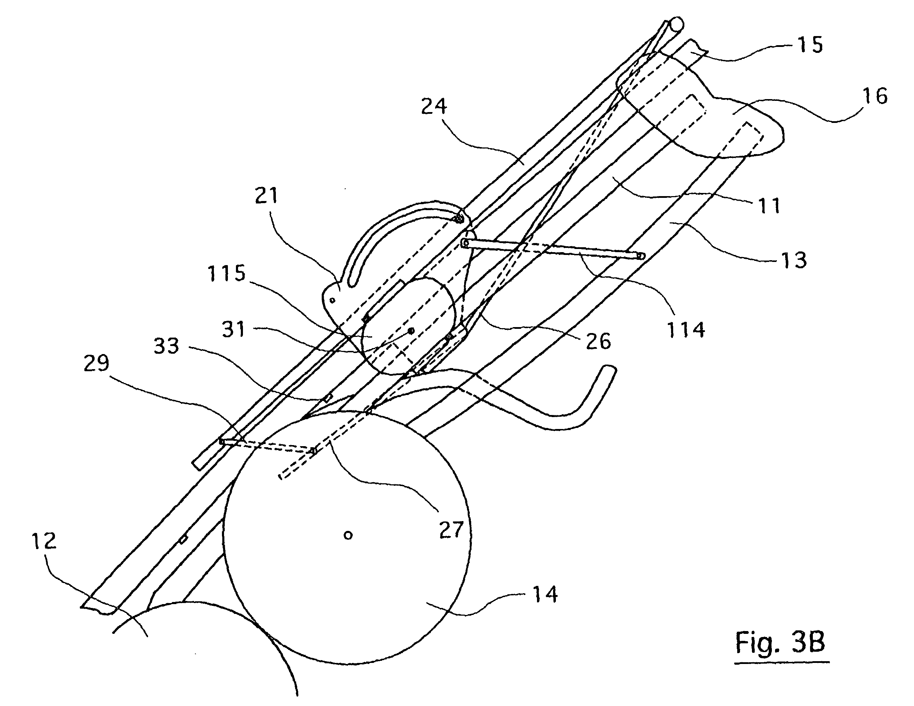

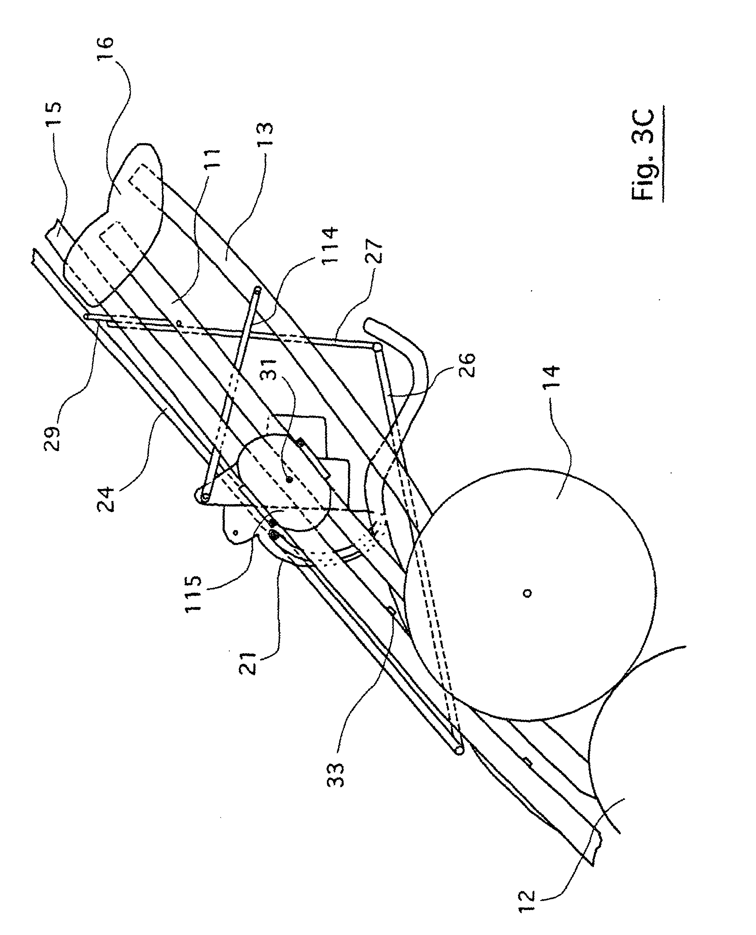

Lorsque l'on plie le châssis, le bras-poussoir 15 coulisse le long du piètement avant 11, et le piètement arrière 13, entrainé par la traverse 17, vient se positionner parallèlement au piètement avant 11, ainsi que cela est illustré sur les figures 3A et 3C.

La biellette 114 entraîne l'élément de solidarisation 19 en coulissement le long du bras-poussoir 15 et du piètement avant 11, vers la roue avant 12.

Ce déplacement libère l'élément de solidarisation 19, qui n'est plus maintenu par les butées 110 et 111. Il peut en conséquence pivoter librement autour de son axe 31, dans les limites permises par la biellette 114. Comme cela apparaît sur les trois figures 3A à 3C, cette rotation couvre un angle très important, supérieur à 60°, pour assurer un pliage efficace de la poussette, quelle que soit le sens de l'inclinaison du hamac.

Ce pliage efficace est obtenu lorsque la partie supérieure 24 du cadre du hamac (correspondant à l'armature du hamac) se trouve parallèle ou sensiblement parallèle, au plan défini par le piètement avant 11. Le hamac prend naturellement cette position lors du pliage (dans certains cas et certains modes de réalisation une mise en place finale manuelle pourra être nécessaire).

Les figures 3A à 3C illustrent la poussette pliée dans les trois positions de hamac des figures 2A à 2C. On notera que, dans le cas de la figure 3C où le hamac est en position face à l'extérieur, l'élément de solidarisation 19 coulisse moins loin vers la roue avant 12. Ainsi, le volume en position pliée reste limité à son minimum. En d'autres termes, le hamac se positionne par rapport au châssis de façon qu'il ne dépasse pas au-delà des bras-poussoirs ni des roues, et donc que la longueur en position pliée reste limitée à celle imposée par le châssis.

On note, sur ces figures, que la biellette 114 peut se déplacer en rotation par rapport au piètement arrière 13, ce qui permet à l'élément de solidarisation 19 de pivoter autour de son axe 31, solidaire du coulisseau 115. Lorsque l'on déplie la poussette, ce coulisseau 115 (portant l'élément de solidarisation 19) est entraîné par le coulissement du bras-poussoir 15 vers la pièce de liaison 16, par l'intermédiaire d'un butée 33.

Dans le même temps, sous l'action de la biellette 114, elle-même entraînée par le piètement arrière 13, le coulisseau 115 est ramené vers sa position fixe (figure 1), jusqu'à ce que les cames 112 et 113 viennent en contact avec les butées 110 et 111.

Le réglage de l'inclinaison ayant été conservé par l'élément de solidarisation 21 (position du doigt 23 par rapport à la fente 212) lors du pliage, le hamac reprend donc automatiquement son inclinaison précédente, sans qu'aucune manipulation particulière ne soit nécessaire, lors du pliage ou du dépliage.

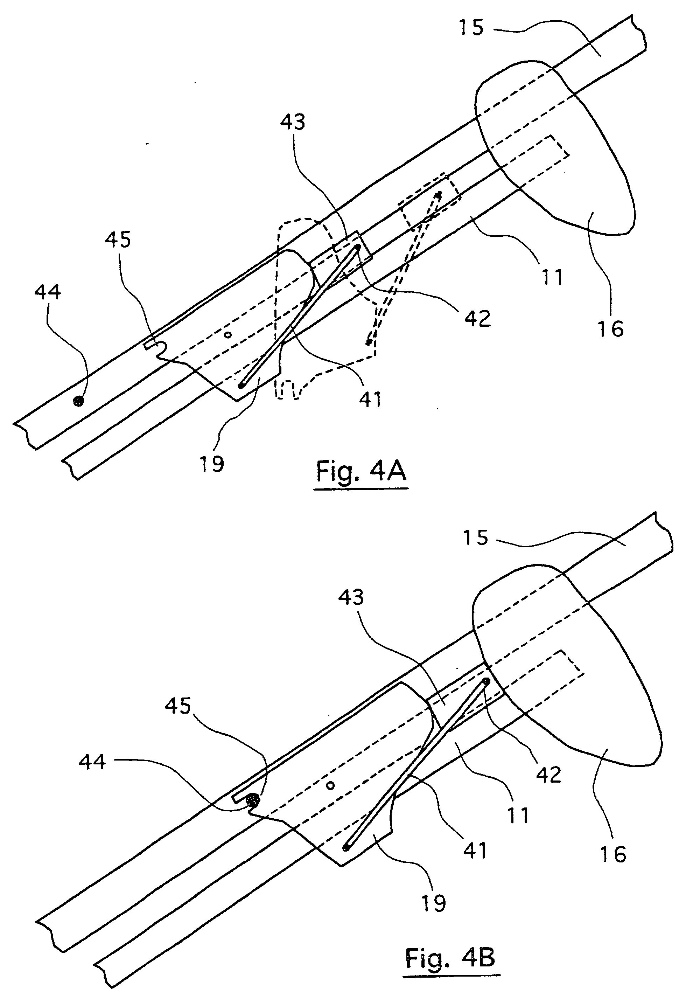

Les figures 4A et 4B illustrent un second mode de réalisation de l'invention. Dans ce second mode de réalisation, les éléments de solidarisation sont similaires à ceux décrits précédemment, seuls les moyens de guidage et de verrouillage étant différents. On a donc seulement illustré ces derniers.

Selon ce second mode de réalisation, la biellette 41 de verrouillage/déverrouillage de l'élément de solidarisation 19 a une extrémité 42 montée non plus sur le piètement arrière, mais sur une pièce 43 coulissant entre le bras-poussoir 15 et le piètement avant 11, sur une portion définie par la pièce, ou manchon, de liaison 16 et le coulisseau 115, qui porte l'élément de solidarisation 19. Bien sûr, selon d'autres modes de réalisation, cette pièce peut suivre le même mouvement en coulissant sur le bras-poussoir 15 et/ou sur le piètement avant 11.

En position de châssis déplié, tel qu'illustré en figure 4B, la pièce coulissante 43 vient en contact avec la pièce de liaison 16, et est maintenue par le coulisseau 115, qui porte l'élément de solidarisation 19. Elle ne peut donc pas coulisser. La biellette 41 a entrainée le coulisseau 115 (et donc l'élément de solidarisation 19) dans sa position fixe unique.

Ce dernier est maintenu dans cette position fixe de façon sûre à l'aide d'un ergot 44 monté sur le bras-poussoir 15 et qui coopère avec une encoche 45 prévue à cet effet sur l'élément de liaison. D'autres moyens de blocage peuvent être envisagés, du type des butées et cames décrites dans le cadre du premier mode de réalisation. Inversement, un tel ergot peut être mis en oeuvre dans le premier mode de réalisation.

En position pliée, illustrée en figure 4A, le bras-poussoir éloigne l'élément de solidarisation 19 de la pièce de liaison 16. La pièce coulissante 43 peut alors se déplacer librement entre ceux-ci. L'ergot 44 se libère de l'encoche 45, ce qui permet à l'élément de solidarisation 19 d'être mobile en rotation par rapport au coulisseau 115 autour de son axe, sur une plage angulaire correspondant à la plage de déplacement de la pièce coulissante 43. Une première position, correspondant au hamac en position assise, est illustrée en trait plein. Une seconde position, correspondant au hamac en position couchée, est présentée en pointillés. Le principe de fonctionnement est donc le même que celui décrit plus haut. En position pliée, le hamac peut venir dans un plan parallèle aux piètements avant et aux bras-poussoirs. Lors du dépliage, il reprend son inclinaison précédente.

## Revendications

1. Poussette pliante pour enfant, du type comprenant un hamac (22) inclinable monté sur un châssis de poussette, présentant deux bras-poussoirs (15) pouvant coulisser, de façon à permettre le pliage, le long de deux piètements avant (11) respectivement, la solidarisation dudit hamac sur ledit châssis étant assurée par la coopération entre des premiers moyens (21) de solidarisation montés sur ledit hamac et des seconds moyens (19) de solidarisation montés sur ledit châssis,
**caractérisée en ce que** lesdits premiers moyens (21) de solidarisation portent des moyens (23, 212) de réglage de l'inclinaison dudit hamac, et **en ce que** lesdits seconds moyens de solidarisation (19) coopèrent avec des moyens de verrouillage (110, 111, 112, 113, 114) tels que :
- lorsque ledit châssis est en position déployée, lesdits seconds moyens de solidarisation (19) sont maintenus dans une position fixe unique ;
- lorsque ledit châssis est en position pliée, lesdits seconds moyens de solidarisation (19) sont libres en rotation, selon un axe (31) perpendiculaire auxdits piètements avant (11) et parallèle au plan formé par le châssis plié, sur une plage de rotation prédéterminée,
de façon que ledit hamac (22) puisse venir sensiblement dans le plan formé par ledit châssis plié, sur une plage de rotation prédéterminée.

2. Poussette selon la revendication 1, **caractérisée en ce que** lesdits premiers moyens de solidarisation (21) peuvent être solidarisés auxdits seconds moyens de solidarisation (19) de deux façons distinctes, ledit hamac (22) pouvant être placé de façon que l'enfant transporté ait le regard vers l'avant ou vers l'arrière, par rapport à la direction de progression de la poussette.

3. Poussette selon l'une quelconque des revendications 1 et 2, **caractérisée en ce que** ladite plage de rotation couvre un angle d'au moins 60°.

4. Poussette selon l'une quelconque des revendications 1 à 3, **caractérisée en ce que** lesdits moyens de verrouillage comprennent au moins une biellette (114), dont une première extrémité est monté sur un piètement amère (13) dudit châssis et une seconde extrémité est montée sur lesdits seconds moyens de solidarisation (19).

5. Poussette selon l'une quelconque des revendications 1 à 4, **caractérisée en ce que** ladite position fixe unique desdits seconds moyens de solidarisation (19) est définie par au moins une butée (112, 113) réalisée sur ledit châssis, ladite butée coopérant avec une came (110, 111) prévue à cet effet sur lesdits seconds moyens de solidarisation (19).

6. Poussette selon la revendication 5, **caractérisée en ce qu'**elle comprend une butée supérieure (112), réalisée sur un desdits bras-poussoirs (15), et une butée inférieure (113), réalisée sur le piètement avant (11) correspondant.

7. Poussette pliante selon l'une quelconque des revendicatons 1 à 3, **caractérisée en ce que** lesdits moyens de verrouillage comprennent au moins une biellette (41) dont une première extrémité est montée sur l'un desdits seconds éléments de solidarisation (19) et la seconde extrémité est mobile parallèlement auxdits piètements avant (111) et auxdits bras-poussoirs (15).

8. Poussette pliante selon la revendication 7, **caractérisée en ce que** ladite extrémité de ladite biellette (41) est monté sur une pièce (43) coulissant entre le piètement (11) et le bras-poussoir (15).

9. Poussette pliante selon la revendication 8, **caractérisée en ce que**, en position déployée, ladite pièce coulissante (43) vient en contact avec un manchon (16) de guidage et de maintien d'un desdits piètements (11) et du bras-poussoir (15) correspondant.

10. Poussette pliante selon l'une quelconque des revendications 1 à 9, **caractérisée en ce qu'**elle comprend des moyens de solidarisation similaires sur chacune de ses deux parties latérales.

## Patentansprüche

1. Zusammenklappbarer Kinderwagen, der eine an einen Rahmen des Kinderwagens angebrachte, verneigbare Hängematte (22) umfasst, wobei der Kinderwagen zwei Schiebearme (15) aufweist, die so gleiten können, dass sie jeweils das Falten entlang zweier vorderer Gestelle (11) ermöglichen und wobei die Befestigung der Hängematte am Rahmen durch Zusammenwirken zwischen ersten, an der Hängematte angebrachte Verbindungsmittel (21) und zweite, am Rahmen angebrachte Verbindungsmittel (19) sichergestellt ist,
**dadurch gekennzeichnet, dass** die ersten Verbindungsmittel (21) Mittel (23, 212) zum Einstellen der Neigung der Hängematte aufweisen und,
dass die zweiten Verbindungsmittel (19) mit Verriegelungsmitteln (110, 111, 112, 113, 114) zusammenwirken, die so beschaffen sind, dass:
- wenn der Rahmen entfaltet ist, die zweiten Verbindungsmittel (19) in einer einzigen fixen Position gehalten werden;
- wenn der Rahmen zusammengefaltet ist, die zweiten Verbindungsmittel (19) sich frei um eine Achse (31) drehen können, die senkrecht zu den vorderen Gestellen (11) und parallel zu der vom zusammengefalteten Rahmen gebildeten Ebene liegt, auf einem vorgegebenen Umdrehungsbereich,
so dass die Hängematte (22) auf einem vorgegebenen Umdrehungsbereich in etwa in die vom zusammengefalteten Rahmen gebildete Ebene kommt.

2. Kinderwagen nach Anspruch 1, **dadurch gekennzeichnet, dass** die ersten Verbindungsmittel (21) mit den zweiten Verbindungsmitteln (19) in zwei verschiedenen Weisen verbunden werden können, wobei die Hängematte (22) so angebracht werden kann, dass das beförderte Kind im Verhältnis zur Bewegungsrichtung des Kinderwagens nach vorne oder nach hinten schaut.

3. Kinderwagen nach einem der Ansprüche 1 oder 2, **dadurch gekennzeichnet, dass** der Undrehungsbereich einen Winkel von mindestens 60° umfasst.

4. Kinderwagen nach einem der Ansprüche 1 bis 3, **dadurch gekennzeichnet, dass** die Verriegelungsmittel mindestens einen Schwingarm (114) aufweisen, deren erstes Ende an einem hinteren Gestell (13) des Rahmens und deren zweites Ende mit den zweiten Verbindungsmitteln (19) verbunden ist.

5. Kinderwagen nach einem der Ansprüche 1 bis 4, **dadurch gekennzeichnet, dass** die einzige feste Position der zweiten Verbindungsmittel (19) durch mindestens einen am Rahmen befindlichen Anschlag (112, 113) festgelegt wird, wobei der Anschlag mit einem zu diesem Zweck an den zweiten Verbindungsmitteln (19) vorgesehenen Nocken (110, 111) zusammenwirkt.

6. Kinderwagen nach Anspruch 5, **dadurch gekennzeichnet, dass** sie einen oberen, an einem der Schiebearme (15) angebrachten Anschlag (112) sowie einen unteren, am entsprechenden vorderen Gestell (11) befindlichen Anschlag (113) aufweist.

7. Zusammenklappbarer Kinderwagen nach einem der Ansprüche 1 bis 3,
**dadurch gekennzeichnet, dass** die Verriegelungsmittel mindestens einen Schwingarm (41) aufweisen, deren erstes Ende mit einem der zweiten Verbindungsmittel (19) verbunden ist, während das zweite Ende sich parallel zu den vorderen Gestellen (111) und zu den Schiebearmen (15) bewegen lässt.

8. Zusammenklappbarer Kinderwagen nach Anspruch 7, **dadurch gekennzeichnet, dass** das besagte Ende des Schwingarmes (41) an einem Teil (43) befestigt ist, das zwischen dem Gestell (11) und dem Schiebearm (15) gleitet.

9. Zusammenklappbarer Kinderwagen nach Anspruch 8, **dadurch gekennzeichnet, dass** in der entfalteten Position, das gleitende Teil (43) eine Führungs- und Haltemuffe (16) eines der Gestelle (11) und des entsprechenden Schiebearmes (15) berührt.

10. Zusammenklappbarer Kinderwagen nach einem der Ansprüche 1 bis 9, **dadurch gekennzeichnet, dass** er an beiden Seitenteilen ähnliche Verbindungsmittel aufweist.

## Claims

1. Folding pushchair for a child, of the type comprising a hammock (22) that can be inclined, mounted on a pushchair chassis, having two pushing arms (15) that can slide, in such a way as to allow folding respectively along two front struts (11), the attachment of the said hammock onto the said chassis being provided by cooperation between the first fixing means (21) mounted on the said hammock and second fixing means (19) mounted on the said chassis, **characterized in that** the said first fixing means (21) carry means (23, 212) of adjusting the inclination of the said hammock, and **in that** the said second fixing means (19) cooperate with locking means (110, 111, 112, 113, 114) such that:
- when the said chassis is in the unfolded position, the said second fixing means (19) are held in a single fixed position;
- when the said chassis is in the folded position, the said second fixing means (19) are free to rotate, according to an axis (31) perpendicular to the said front struts (11) and parallel to the plane formed by the folded chassis, over a predetermined range of rotation,
and in such a way that the said hammock (22) can move substantially into the plane formed by the said folded chassis, over a predetermined range of rotation.

2. Pushchair according to Claim 1, **characterized in that** the said first fixing means (21) can be made integral with the said second fixing means (19) in two separate ways, it being possible to position the said hammock (22) in such a way that the transported child is facing towards the front or towards the back in relation to the direction of travel of the pushchair.

3. Pushchair according to either of Claims 1 or 2, **characterized in that** the said range of rotation covers an angle of at least 60°.

4. Pushchair according to any one of Claims 1 to 3, **characterized in that** the said locking means comprise at least one link (114), a first end of which is mounted on a rear strut (13) of the said chassis and a second end is mounted on the said fixing means (19).

5. Pushchair according to any one of Claims 1 to 4, **characterized in that** the said single fixed position of the said second fixing means (19) is defined by at least one stop (112, 113) created on the said chassis, the said stop cooperating with a cam (110, 111) provided for this purpose on the said second fixing means (19).

6. Pushchair according to Claim 5, **characterized in that** it comprises an upper stop (112) created on one of the said pushing arms (15), and a lower stop (113) created on the corresponding front strut (11).

7. Folding pushchair according to any one of Claims 1 to 3, **characterized in that** the said locking means comprise at least one link (41), a first end of which is mounted on one of the said second fixing means (19) and the second end is movable parallel to the said front struts (111) and the said pushing arms (15).

8. Folding pushchair according to Claim 7, **characterized in that** the said end of the said link (41) is mounted on a component (43) that slides between the strut (11) and the pushing arm (15).

9. Folding pushchair according to Claim 8, **characterized in that**, in the unfolded position, the said sliding component (43) comes into contact with a sleeve (16) that guides and holds one of the said struts (11) and the corresponding pushing arm (15).

10. Folding pushchair according to any one of Claims 1 to 9, **characterized in that** it comprises similar fixing means on each of its two lateral parts.
